# EUROPÄISCHE PATENTANMELDUNG

(11) **EP 0 972 786 A1**
(43) Veröffentlichungstag der Anmeldung: **19.01.2000**
(21) Anmeldenummer: 99110550.3
(22) Anmeldetag: 29.05.1999
(51) Int. Cl.: C08G 18/79, C08G 18/75, C08G 18/32, C08G 18/80, C09D 175/06, C08G 18/10

(54) **Harnstoff- und uretdiongruppenhaltige Polyadditionsverbindungen, ein Verfahren zu ihrer Herstellung sowie deren Verwendung**

(30) Priorität: 13.07.1998 DE 19831307
(71) Anmelder: Degussa-Hüls Aktiengesellschaft, 60287 Frankfurt am Main (DE)
(72) Erfinder: Wenning, Andreas, Dr., 48301 Nottuln (DE)

(57) **Zusammenfassung**

Die Erfindung betrifft harnstoff- und uretdiongruppenhaltige Polyadditionsverbindungen mit terminalen Hydroxylgruppen, ein Verfahren zu ihrer Herstellung sowie deren Verwendung zur Herstellung von Polyurethan-Pulverlacken für Beschichtungen mit matter Oberfläche.

## Beschreibung

Gegenstand der vorliegenden Erfindung sind harnstoff- und uretdiongruppenhaltige Polyadditionsverbindungen mit terminalen Hydroxylgruppen, ein Verfahren zu ihrer Herstellung sowie die Verwendung in Polyurethan-Pulverlacken für Beschichtungen mit matter Oberfläche.

Seit geraumer Zeit gibt es ein zunehmendes Interesse an Pulverlacken, die eine matte Oberfläche ergeben. Die Ursache dafür ist überwiegend praktischer Art. Glänzende Flächen erfordern ein weitaus höheres Maß an Reinigung als matte Flächen. Darüber hinaus kann es aus sicherheitstechnischen Gründen wünschenswert sein, stark reflektierende Flächen zu vermeiden.

Das einfachste Prinzip, eine matte Oberfläche zu erhalten, besteht darin, dem Pulverlack je nach Ausmaß des gewünschten Matteffektes kleinere oder größere Mengen Füllstoffe, wie z. B. Kreide, fein verteiltes Siliciumoxid oder Bariumsulfat, beizumischen. Diese Zusätze bewirken jedoch eine Verschlechterung der lacktechnischen Filmeigenschaften, wie Haftung, Flexibilität, Schlagfestigkeit und Chemikalienbeständigkeit.

Die Zugabe von Stoffen, die mit dem Lack unverträglich sind, wie z. B. Wachse oder Cellulosederivate, bewirkt zwar deutlich eine Mattierung, aber geringfügige Änderungen während des Extrudierens führen zu Schwankungen im Oberflächenglanz. Die Reproduzierbarkeit des Matteffektes ist nicht gewährleistet.

Harnstoff- und uretdiongruppenhaltige Polyisocyanate sind erst seit kurzer Zeit bekannt. In der DE-OS 195 46 750 werden Reaktionsprodukte aus Isophorondiisocyanat-Uretdion und disekundären Diaminen als Härter zur Herstellung von Polyurethan (PUR)-Beschichtungen mit glänzenden Oberflächen offenbart.

In der DE-OS 196 30 844 werden erstmals matte PUR-Pulverlacke beschrieben, die harnstoffgruppenhaltige Isophorondiisocyanat-Uretdione als Härterkomponente enthalten. Sie werden durch die Umsetzung von Uretdionen mit Wasser hergestellt. Dabei bilden sich intermediär unter Abspaltung von Kohlendioxid primäre Amine, die sich mit noch vorhandenen Isocyanatgruppen zu Harnstoffen umsetzen. Die Stickstoffatome der Harnstoffgruppen sind jeweils monosubstituiert. Reaktionen von Polyisocyanaten mit Wasser sind aufgrund der Bildung von Nebenprodukten schwierig zu reproduzieren.

Die DE-OS 196 37 375 beschreibt PUR-Pulverlacke, die durch harnstoffgruppenhaltige Isophorondiisocyanat-Uretdione als Härter mattierend eingestellt werden. Diese Härter entstehen durch die Umsetzung von Isophorondiisocyanat-Uretdion mit disekundären Diaminen. Die disekundären Diamine sind Umsetzungsprodukte aus diprimären Diaminen und Malein- oder Fumarsäureester.

In der DE-OS 196 37 377 werden uretdiongruppen- und harnstoffgruppenhaltige Polyadditionsprodukte als Härterkomponente zur Mattierung von PUR-Pulverlacken beansprucht. Die Herstellung dieser Härter erfolgt durch die Umsetzung von Isophorondiisocyanat-Uretdion mit Diaminen, die eine primäre und sekundäre Aminogruppen enthalten. Die Herstellung der reinen Diamine ist z. T. komplex und recht kostenintensiv.

Überraschenderweise konnten PUR-Pulverlacke mit mattem Aussehen gefunden werden, die nicht mit den aufgeführten Nachteilen behaftet sind, wenn als Härterkomponente für die PUR-Pulverlacke harnstoff- und uretdiongruppenhaltige Polyadditionsverbindungen des Isophorondiisocyanat-Uretdions (abgekürzt: IPDI-Uretdion), die endständig Hydroxylgruppen tragen, eingesetzt wurden.

Gegenstand der vorliegenden Erfindung sind somit Harnstoff- und uretdiongruppenhaltige Polyadditionsverbindungen folgender Zusammensetzung: 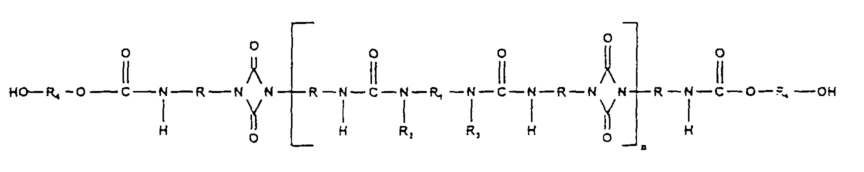 wobei die Substituenten die folgende Bedeutung aufweisen
- R: : 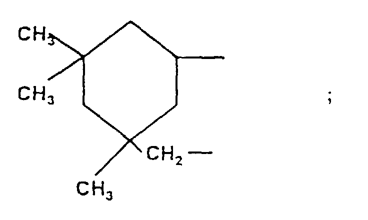
- n:: 1-20;
- R₁:: R oder lineare, verzweigte oder cyclische Alkylen- oder Phenylenreste mit 2 - 16 C-Atomen ;
- R₂, R₃:: H oder eine 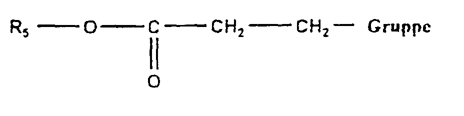
- R₄:: aliphatische, cycloaliphatische oder aromatische Kohlenwasserstoffreste mit 2 - 30 C-Atomen;
- R₅:: Kohlenwasserstoffreste mir 1 - 14 C-Atomen;
erhältlich durch Umsetzung von Isophorondiisocyanat-Uretdion mit Diaminen, die eine primäre und eine sekundäre Aminogruppe enthalten, oder mit Diamingemischen aus 1 - 60 Mol-% diprimären Diaminen, 1 - 98 Mol-% primär/sekundären Diaminen und 1 - 98 Mol-% disekundären Diaminen, und anschließender Umsetzung mit Diolen.

Vorzugsweise enthalten die Diamingemische mindestens 1 Mol-% diprimäre Diamine, mindestens 30 Mol-% primär/sekundären Diamine und mindestens 1 Mol-% disekundäre Diamine.

Ein weiterer Gegenstand der vorliegenden Erfindung ist ein Verfahren zur Herstellung der erfindungsgemäßen Verbindungen entsprechend der folgenden Reaktionsgleichung: 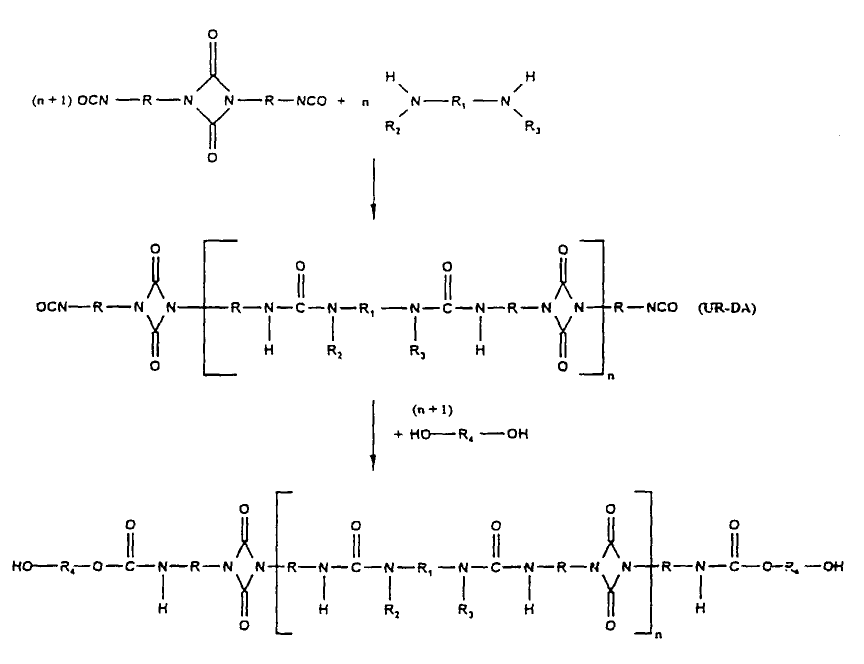 wobei die Substituenten die obengenannte Bedeutung haben.

Die erfindungsgemäßen Verbindungen zeichnen sich durch einen Gesamt-NCO-Gehalt von 8 - 18%, vorzugsweise 10 - 17% und einen Uretdiongruppengehalt von 1,0 - 2,1 mmol/g aus. Sie tragen endständig Hydroxylgruppen und besitzen eine Funktionalität von 2. Ihr Schmelzpunkt variiert in einem Bereich von 120 - 180 °C, vorzugsweise 140 - 170 °C. Sie eignen sich in hervorragender Weise zur Herstellung von PUR-Pulverbeschichtungen.

Bei dem erfindungsgemäß einzusetzenden Uretdion handelt es sich um das IPDI-Uretdion, wie es in den DE-OSS 30 30 513 und 37 39 549 beschrieben wird, mit einem freien NCO-Gehalt von 17 - 18 %, d. h. daß mehr oder minder hohe Anteile an Polyuretdion des IPDI im Reaktionsprodukt vorliegen müssen. Der Monomergehalt liegt bei 1 %. Der Gesamt-NCO-Gehalt des IPDI-Uretdions nach dem Erhitzen auf 180 - 200 °C (0,5 h) beträgt 37,5 - 37,7%.

Die erfindungsgemäß einzusetzenden Diamine sind Diamine mit einer primären und einer sekundären Aminogruppe oder Gemische aus diprimären, primär/sekundären und disekundären Diaminen. Die Diamine mit einer primären und einer sekundären Aminogruppe werden in zwei Stufen hergestellt, wobei in der 1. Stufe das diprimäre Diamin mit einem Aldehyd oder Keton zur Schiffschen Base kondensiert wird und in der 2. Stufe die Hydrierung und fraktionierte Destillation der Schiffschen Base erfolgt. Um möglichst wenig Nebenprodukt (Di-Schiffsche Base) zu erhalten, muß mit einem großen Überschuß an Diamin gearbeitet werden; in der Regel werden 10 mol Diamin mit einem Mol Carbonylverbindung umgesetzt. Für die Kondensation zur Schiffschen Base kommen grundsätzlich alle aliphatischen und cycloaliphatischen Diamine, wie z. B. Ethylendiamin, 1,2-Diaminopropan, 2-Methylpentamethylendiamin, Hexamethylendiamin, 2,2,4-(2,4,4)-Trimethylenhexamethylendiamin, Isophorondiamin, 1,2-Diaminocyclohexan sowie 1,3-Bis(aminomethyl)benzol, in Frage. Für die Herstellung der Schiffschen Base einzusetzende Carbonylverbindung kommen grundsätzlich alle (cyclo)aliphatischen Aldehyde und Ketone in Frage; bevorzugt werden jedoch Isobutyraldehyd, 2-Ethylhexanal, Methylisobutylketon, Methylethylketon, Diisobutylketon, Cyclohexanon und 3,5,5-Trimethylcyclohexanon eingesetzt. Bevorzugte primär/sekundäre Diamine sind 5-Amino-N-(1,3-dimethylbutyl)-1,3,3-trimethylcyclohexanmethanamin und 5-Amino-N-(isopropyl)-1,3,3-trimethylcyclohexanmethanamin.

Eine weitere Variante besteht darin, Diamine einzusetzen, die durch Reaktion von diprimären Diaminen mit Acrylsäureestern, wie z. B. Acrylsäuremethyl-, -ethyl-, *-*butyl-, -t-butyl-, -2-ethylhexylester, erhalten werden. Die Umsetzung des Diamins mit dem Acrylsäureester erfolgt bei 60 - 80 °C im Molverhältnis 1 : 1. Bevorzugt werden hydrierte cyanethylierte Monoamine, wie z. B. N-Methyl-1,3-propandiamin, eingesetzt, besonders bevorzugt das Hydrierungsprodukt des Acetonins (4-Isopropylamino-2-amino-2-methylpentan).

Die erfindungsgemäß geeigneten disekundären Diamine sind im Prinzip nach dem gleichen zweistufigen Verfahren wie zur Herstellung der primär/sekundären Diamine herstellbar. Bei der Kondensation werden pro Mol Aminogruppe ein Mol Aldehyd oder Keton eingesetzt. Ein bevorzuges disekundäres Diamin ist N,N'-Bis(1,3-dimethylbutyl)-1,3,3-trimethylcyclohexanmethandiamin-1,5.

Die erfindungsgemäß geeigneten Diole sind alle in der PUR-Chemie üblicherweise eingesetzten Diole. Bevorzugt sind Ethylenglykol, Butandiol-1,4, Pentandiol-1,5, Hexandiol-1,6, 2-Methylpentandiol-1,5, 2,2,2-(2,4,4)-Trimethylhexandiol (Isomerengemisch), 2-Methylpropandiol, 2,2-Dimethylpropandiol, Diethylengykol, Dodecandiol-1,12, trans- und cis-Cyclohexyldimethanol und Hydroxypivalinsäureneopentylglykolester.

Die erfindungsgemäßen Polyadditionsverbindungen werden nach dem nunmehr erläuterten Verfahren hergestellt. Die Herstellung erfolgt in zwei aufeinander folgenden Stufen, wobei
1. in der 1. Stufe IPDI-Uretdion mit dem primär/disekundären Diamin oder mit dem Gemisch aus diprimären, primär/disekundären und disekundären Diaminen umgesetzt wird und
2. in der 2. Stufe dann die Umsetzung der noch freien NCO-Gruppen mir dem Diol erfolgt.

Die Umsetzung der 1. und 2. Stufe erfolgt in Lösung, wobei das Lösemittel aus der Gruppe aromatischer Kohlenwasserstoffe, Ester oder Ketone, wie z. B. Toluol, Ethyl- oder Butylacetat, Aceton, Methylethylketon, Methylisobutylketon sowie beliebige Gemische dieser Lösemittel, ausgewählt wird. Bevorzugtes Lösemittel ist Aceton. Die Herstellung der erfindungsgemäßen Verbindungen erfolgt so, daß zu der acetonischen Lösung des IPDI-Uretdions bei Raumtemperatur das Diamingemisch so zudosiert wird, daß die Temperatur der Reaktionslösung nicht über 40 °C steigt. Nach Beendigung der Diaminzugabe ist die Reaktion beendet. Danach schließt sich die Umsetzung mit dem Diol, bevorzugt in Gegenwart von 0,01 - 0,2 Gew.-% Dibutylzinndilaurat (DBTL) an. Schließlich wird das Lösemittel abdestilliert.

Ein weiterer Gegenstand der vorliegenden Erfindung sind Polyurethan-Pulverlacke, welche die erfindungsgemäßen Polyadditionsverbindungen in Kombination mit hydroxylgruppenhaltigen Polymeren enthalten, zur Herstellung von matten Oberflächen.

Als Polyolkomponente zur Herstellung der erfindungsgemäßen matten PUR-Pulverlacke kommen grundsätzlich alle hydroxylgruppenhaltigen Polymere in Frage, wie z. B. Epoxidharze oder Hydroxyacrylate; bevorzugt werden jedoch hydroxylgruppenhaltige Polyester mit einer OH-Funktionalität von 3 - 6, einem mittleren Molgewicht von 1800 - 5000, bevorzugt 2300 - 4500, einer OH-Zahl von 25 -140 mg KOH/g, bevorzugt 30 - 90 mg KOH/g, und einem Schmelzpunkt von ≥ 70 bis ≤ 130 °C, bevorzugt ≥ 75 bis ≤ 110 °C. Derartige OH-haltige Polyester, wie sie in bekannter Weise durch Kondensation von Polyolen und Polycarbonsäuren hergestellt werden, sind z. B. in den DE-OSS 27 35 497 und 30 04 903 beschrieben.

Zur Herstellung der gebrauchsfertigen Pulverlacke werden das hydroxylgruppenhaltige Harz und die erfindungsgemäßen Polyadditionsverbindungen, gegebenenfalls mit Pigmenten, wie z. B. TiO₂, Verlaufsmittel, wie z. B. Polybutylacrylat, auf Extrudern oder Knetern bei Temperaturen zwischen 80 - 140 °C so gemischt, daß auf eine OH-Gruppe des hydroxylgruppenhaltigen Harzes 0,6 bis 1,2, vorzugsweise 0,3- 1,1, intern blockierte NCO-Gruppen zu stehen kommen.

Die so hergestellten Pulverlacke können nach den üblichen Pulverauftragsverfahren, wie z. B. elektrostatisches Pulversprühen oder Wirbelsintern, auf die zu überziehenden Formteile aufgebracht werden. Die Härtung der Überzüge erfolgt durch Erhitzen auf Temperaturen von 170 - 220 °C. Man erhält flexible Überzüge mit hervorragenden Korrosionsschutzeigenschaften und einer ausgezeichneten Thermostabilität. Im Vergleich zu den bis jetzt bekannten PUR-Pulvern auf Basis blockierter Polyisocyanate zeichnen sich die erfindungsgemäßen PUR-Pulver durch mattes Aussehen aus, wobei der Mattglanz in einem weiten Bereich variabel einstellbar ist.

Nachfolgend wird der Gegenstand der Erfindung anhand von Beispielen erläutert.

### Beispiele

### A) Ausgangsverbindungen für die Härterkomponente

### I. NCO-Komponente

Als NCO-Komponente wurde ein IPDI-Uretdion mit einem NCO-Gehalt von 17,6 % und einem IPDI-Gehalt von 1 % eingesetzt. Der NCO-Gehalt des IPDI-Uretdions betrug nach dem Erhitzen auf 180 °C (1 h) 37,5 %.

### II. Diamine als Kettenverlängerungsmittel

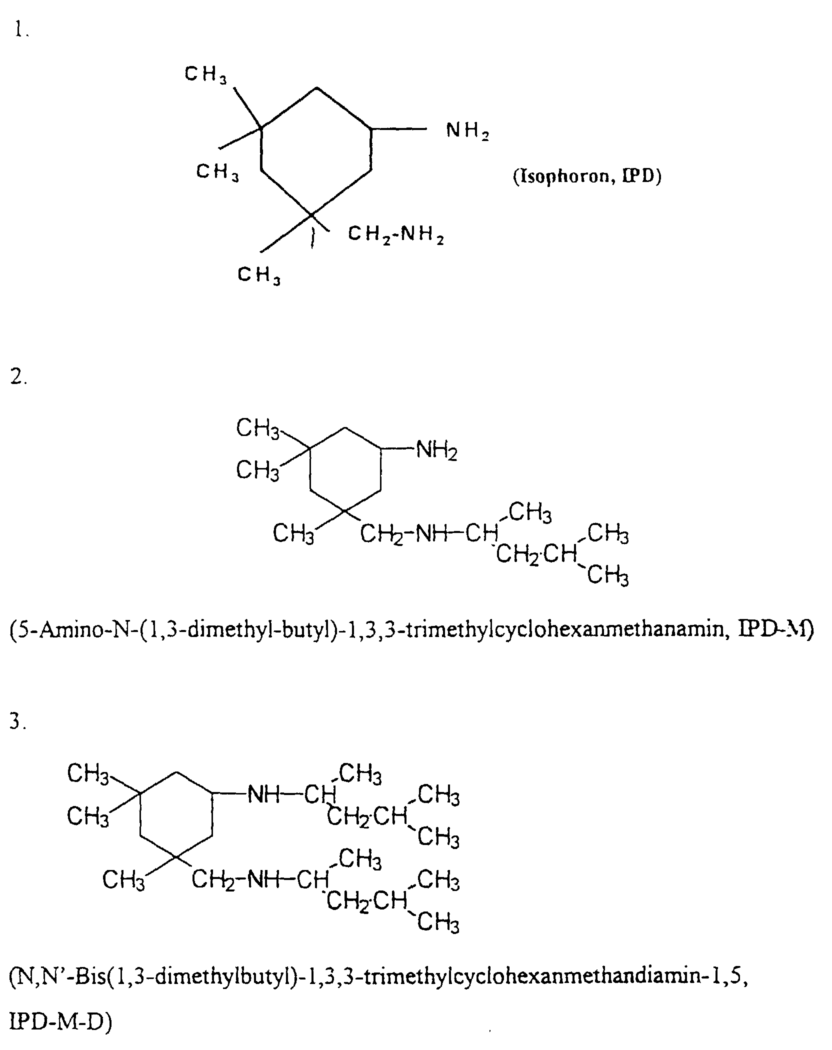

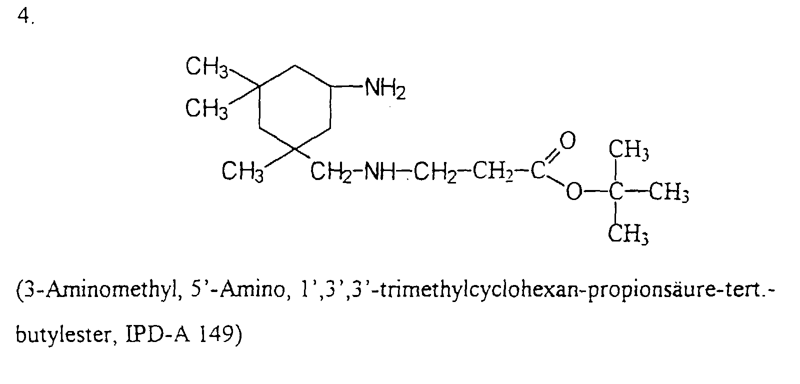

### B) Allgemeine Herstellungsvorschrift der erfindungsgemäßen Verbindungen

Zu der acetonischen Lösung des IPDI-Uretdions wird das Diamin oder Diamingemisch bei Raumtemperatur so zudosiert, daß die Temperatur der Reaktionslösung nicht über 40 °C steigt. Nach Beendigung der Diaminzugabe werden Diol und Katalysator zugegeben. Die Reaktionstemperatur darf 100 °C nicht überschreiten. Die Umsetzung wird mittels titrimetischer NCO-Bestimmung kontrolliert und ist nach etwa 1 bis 3 Stunden beendet. Danach wird das Lösemittel entfernt, das Produkt abgekült und ggf. zerkleinert.

Die in der nachfolgenden Tabelle 1 aufgeführt Verbindungen wurden entsprechend der allgemeinen Herstellungsvorschrift hergestellt.

**Tabelle 1**

| **Erfindungsgemäße Polyadditionsverbindungen** | | | | | | | | |
|---|---|---|---|---|---|---|---|---|
| Beispiel Nr. | Zusammensetzung [mol] | | | | | | NCO-Gehalt gesamt [Massen-%] | Schmelzbereich [°C] |
| | IPDI-Uretdion [mol] | IPD [mol] | IPD-M [mol] | IPD-M-D [mol] | IPD-A 149 [mol] | Diol [mol] | | |
| B. 1 | 10 | - | 9 | - | - | 2 B-1,4 | 11,1 | 151 - 154 |
| B. 2 | 10 | - | 9 | - | - | 2 E | 11,1 | 167 - 170 |
| B. 3 | 10 | - | - | - | 9 | 2 E | 11,0 | 153 - 156 |
| B. 4 | 5 | - | 4 | - | - | 2 B-1,4 | 10,0 | 158 - 161 |
| B. 5 | 10 | 2,25 | 4,5 | 2,25 | - | 2 B-1,4 | 11,5 | 154 - 159 |

Die Abkürzungen in der Tabelle 1 bedeuten:
- B-1,4:: Butandiol-1,4
- E:: Ethylenglykol

### C) Polyolkomponente

Als OH-Komponente zur Herstellung der erfindungsgemäßen PUR-Pulver wurde der Polyester ALFTALAT® AN 739 (Hoechst, Italien) mit einer OH-Zahl von 55 - 60 mg KOH/g, einer Säurezahl von 2 - 4 mg KOH/g, einem Schmelzpunkt von 82 - 90 °C und einer Viskosität bei 160 °C von 24 - 29 000 mPa s eingesetzt.

### D) Herstellung der erfindungsgemäßen Pulverlacke

### Allgemeine Herstellungsvorschrift

Die gemahlenen Produkte - erfindungsgemäße Polyadditionsverbindung, Polyester, Verlaufsmittel, Weißpigment werden in einem Kollergang innig vermischt und anschließend im Extruder bei 80 - 140 °C homogenisiert. Nach dem Erkalten wird das Extrudat gebrochen und mit einer Stiftsmühle auf eine Korngröße < 100 m gemahlen. Das so hergestellte Pulver wird mit einer elektrostatischen Pulverspritzanlage bei 60 KV auf entfettete, gegebenenfalls vorbehandelte Eisenbleche appliziert und in einem Umlufttrockenschrank bei 200 °C 15 Minuten eingebrannt.

Der Härter wurde mit dem Polyol im Verhältnis NCO : OH = 1 : 1 gemischt. Zusatzstoffe waren:

| | |
|---|---|
| 40,0 Massen-% | KRONOS 2160 |
| 1,0 Massen-% | RESIFLOW PV 88 |
| 0,5 Massen-% | Benzoin |

Die Abkürzungen in der folgenden Tabelle 2 bedeuten:
- SD: = Schichtdicke in µm
- ET: = Tiefung nach Erichsen in mm (DIN 53 156)
- GG 60 °∢: = Messung des Glanzes nach Gardner (ASTM-D 523)
- KS dir.: = direkter Kugelschlag in inch × lb

**Tabelle 2**

| **Pigmentierte Pulverlacke** | | | | | |
|---|---|---|---|---|---|
| Beispiel D | 1 | 2 | 3 | 4 | 5 |
| Zusammensetzung | | | | | |
| Vernetzer gemäß B. | 1 | 2 | 3 | 4 | 5 |
| Polyester | ALFTALAT® AN 739 | ALFTALAT® AN 739 | ALFTALAT® AN 739 | ALFTALAT® AN 739 | ALFTALAT® AN 739 |
| Bemerkungen: | Die Pulverlacke bestehen aus äquivalenten Mengen Vernetzer und Polyester, zusätzlich enthalten sie 40 Massen-% Weißpigment (KRONOS 2160), 1 Massen-% RESIFLOW PV 88 und 0,5 Massen-% Benzoin | | | | |

| Lackdaten | | | | | |
|---|---|---|---|---|---|
| SD | 80 - 89 | 49 - 70 | 51 - 80 | 71 - 78 | 48 - 73 |
| GG 60 °∢ | 18 | 22 | 18 | 26 | 20 |
| ET | 1,0 | 1,5 | 1.5 | 1,0 | 1,5 |
| KS dir. | 30 | 40 | 40 | 40 | 50 |
| Bemerkungen: | Härtungsbedingungen 200 °C / 15min | | | | |

## Patentansprüche

1. Harnstoff- und uretdiongruppenhaltige Polyadditionsverbindungen folgender Zusammensetzung: 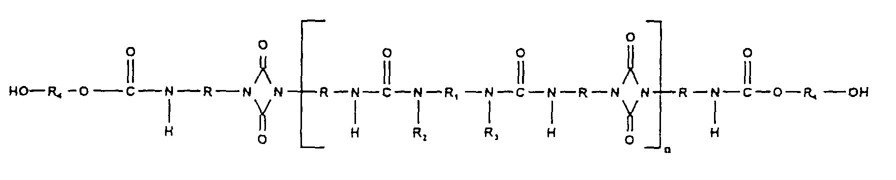 wobei die Substituenten die folgende Bedeutung aufweisen:
R: 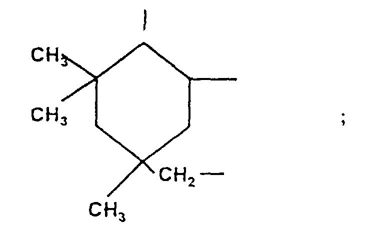
n: 1-20;
R₁: R oder lineare, verzweigte oder cyclische Alkylen- oder Phenylenreste mit 2 - 16 C-Atomen ;
R₂, R₃: H oder eine 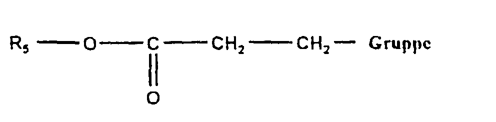
R₄: aliphatische, cycloaliphatische oder aromatische Kohlenwasserstoffreste mit 2 - 30 C-Atomen;
R₅: Kohlenwasserstoffreste mit 1 - 14 C-Atomen;
erhältlich durch Umsetzung von Isophorondiisocyanat-Uretdion mit Diaminen, die eine primäre und eine sekundäre Aminogruppe enthalten, oder mit Diamingemischen aus 1 - 60 Mol-% diprimären Diaminen, 1 - 98 Mol-% primär/sekundären Diaminen und 1 - 98 Mol-% disekundären Diaminen, und anschließender Umsetzung mit Diolen.

2. Polyadditionsverbindungen gemäß Anspruch 1,
dadurch gekennzeichnet,
daß als diprimäre Diamine aliphatische und/oder cycloaliphatische Diamine eingesetzt werden.

3. Polyadditionsverbindungen gemäß Anspruch 1,
dadurch gekennzeichnet,
daß als primär/sekundäre Diamine hydrierte 1 : 1-Umsetzungsprodukte aus diprimären Diaminen und Aldehyden eingesetzt werden.

4. Polyadditionsverbindungen gemäß Anspruch 1,
dadurch gekennzeichnet,
daß als primär/sekundäre Diamine hydrierte 1 : 1 Umsetzungsprodukte aus diprimären Diaminen und Ketonen eingesetzt werden.

5. Polyadditionsverbindungen gemäß Anspruch 1,
dadurch gekennzeichnet,
daß als primär/sekundäre Diamine 1 : 1-Umsetzungsprodukte aus diprimären Diaminen und Acrylsäureestern eingesetzt werden.

6. Polyadditionsverbindungen gemäß Anspruch 1,
dadurch gekennzeichnet,
daß als disekundäre Diamine hydrierte 1 : 2-Umsetzungsprodukte aus diprimären Diaminen und Aldehyden eingesetzt werden.

7. Polyadditionsverbindungen gemäß Anspruch 1,
dadurch gekennzeichnet,
daß als disekundäre Diamine hydrierte 1 : 2-Umsetzungsprodukte aus diprimären Diaminen und Ketonen eingesetzt werden.

8. Polyadditionsverbindungen gemäß Anspruch 1,
dadurch gekennzeichnet,
daß als disekundäre Diamine hydrierte 1 : 2-Umsetzungsprodukte aus diprimären Diaminen und Acrylsäureestern eingesetzt werden.

9. Polyadditionsverbindungen gemäß den Ansprüchen 1-8,
dadurch gekennzeichnet,
daß als diprimäre Diamine Ethylendiamin, 1,2-Diaminopropan, 2-Methylpentamethylendiamin, Hexamethylendiamin, 2,2,4-(2,4,4)-Trimethylenhexamethylendiamin, Isophorondiamin und 1,2-Diaminocyclohexan allein oder in Mischungen eingesetzt werden.

10. Polyadditionsverbindungen gemäß den Ansprüchen 3 oder 6,
dadurch gekennzeichnet,
daß als Aldehyde Isobutyraldehyd und 2-Ethylhexanal eingesetzt werden.

11. Polyadditionsverbindungen gemäß den Ansprüchen 4 oder 7,
dadurch gekennzeichnet,
daß als Ketone Methylisobutylketon, Methylethylketon, Diisobutylketon, Cyclohexanon und 3,5,5-Trimethylcyclohexanon eingesetzt werden.

12. Polyadditionsverbindungen gemäß den Ansprüchen 5 oder 8,
dadurch gekennzeichnet,
daß als Acrylsäureester Acrylsäuremethylester, Acrylsäureethylester, Acrylsäurebutylester, Acrylsäure-t-butylester und Acrylsäure-2-ethylhexylester allein oder in Mischungen eingesetzt werden.

13. Polyadditionsverbindungen gemäß den Ansprüchen 1, 3, 4 oder 5,
dadurch gekennzeichnet,
daß als primär/sekundäre Diamine 5-Amino-N-(1,3-dimethylbutyl)-1,3,3-trimethylcyclohexanmethanamin (IPD-M), 5-Amino-N-(isopropyl)-1,3,3-trimethylcyclohexanmethanamin, N-Methyl-1,3-propandiamin und/oder 4-Isopropylamino-2-amino-2-methylpentan eingesetzt werden.

14. Polyadditionsverbindungen gemäß den Ansprüchen 1, 6, 7 oder 8,
dadurch gekennzeichnet,
daß als disekundäres Diamin N,N'-Bis(1,3-dimethylbutyl)-1,3,3-trimethylcyclohexanmethandiamin-1,5 (IPD-M-D) eingesetzt wird.

15. Polyadditionsverbindungen gemäß den Ansprüchen 1 bis 14,
dadurch gekennzeichnet,
daß als Diole Ethylenglykol, Butandiol-1,4, Pentandiol-1,5, Hexandiol-1,6, 2-Methylpentandiol-1,5, 2,2,2-(2,4,4)-Trimethylhexandiol (Isomerengemisch), 2-Methylpropandiol, 2,2-Dimethylpropandiol, Diethylengykol, Dodecandiol-1,12, trans- und cis-Cyclohexyldimethanol und Hydroxypivalinsäureneopentylglykolester eingesetzt werden.

16. Polyadditionsverbindungen nach den Ansprüchen 1 bis 15,
dadurch gekennzeichnet,
daß sie einen Gesamt-NCO-Gehalt von 8 - 18 %, einen Uretdiongruppengehalt von 1,0 - 2,1 mmol/g und einen Schmelzbereich von 120 - 180 °C aufweisen, endständig Hydroxylgruppen tragen und eine Funktionalität von 2 besitzen.

17. Transparente und pigmentierte Polyurethan-Pulverlacke enthaltend Polyadditionsverbindungen nach den Ansprüchen 1 bis 16 in Kombination mit hydroxylgruppenhaltigen Polymeren.

18. Transparente und pigmentierte Polyurethan-Pulverlacke nach Anspruch 17 in Kombination mit Polyestern, Epoxidharzen und/oder Hydroxyacrylaten.

19. Transparente und pigmentierte Polyurethan-Pulverlacke gemäß Anspruch 18,
dadurch gekennzeichnet,
daß als hydroxylgruppenhaltige Polymere Polyester mit einer OH-Funktionalität von 3 - 6, einem mittleren Molgewicht von 1800 - 5000, einer OH-Zahl von 25 - 140 mg KOH/g und einem Schmelzpunkt von 70 bis 130 °C, eingesetzt werden.

20. Transparente und pigmentierte Polyurethan-Pulverlacke nach den Ansprüchen 18 bis 19,
dadurch gekennzeichnet,
daß die Polyadditionsverbindungen in Kombination mit hydroxylgruppenhaltigen Polymeren weitere Zuschlags- und Hilfsstoffe enthalten.

21. Transparente und pigmentierte Polyurethan-Pulverlacke nach den Ansprüchen 18 bis 20,
dadurch gekennzeichnet,
daß ein OH/NCO-Verhältnis von 1 : 0,6 bis 1 : 1,2 zugrunde liegt.

22. Verfahren zur Herstellung der erfindungsgemäßen Verbindungen gemäß Anspruch 1-16 entsprechend der folgenden Reaktionsgleichung:
